# EUROPEAN PATENT APPLICATION

(11) **EP 2 073 474 A1**
(43) Date of publication of application: **24.06.2009**
(21) Application number: 07301716.2
(22) Date of filing: 20.12.2007
(51) Int. Cl.: H04L 27/26, H04B 10/17, H04B 10/12

(54) **Method and apparatus for transmitting an optical signal using orthogonal frequency division multiplexing**

(71) Applicant: Alcatel Lucent, 75008 Paris (FR)
(72) Inventor: Buchali, Fred, 71336 Waiblingen (DE)
(74) Representative: Urlichs, Stefan

(57) **Abstract**

In order to simplify digital signal processing for optical OFDM transmission in the receiver (Rx), the frequencies used in the transmitter (Tx) for digital-to-analog conversion of an inverse Fourier transformed data signal (TIN) and in the receiver (Rx) for analog-to-digital conversion of the received optical OFDM signal (RIN) are locked to each other. This is achieved by adding a clock signal at the transmit side, restoring this clock signal at the receive side prior to any signal processing and using this restored clock signal to drive analog-to-digital converters (46, 47) in the receiver.

## Description

### Field of the Invention

The present invention relates to the field of telecommunications and more particularly to a method and related apparatus for transmitting an optical signal using orthogonal frequency division multiplexing (OFDM).

### Background of the Invention

Orthogonal Frequency-Division Multiplexing (OFDM) is a digital multi-carrier modulation scheme, which uses a large number of closely-spaced orthogonal sub-carriers. Each sub-carrier is modulated with a conventional modulation scheme such as quadrature amplitude modulation at a low symbol rate, The data rate is similar to conventional single-carrier modulation schemes in the some bandwidth. In practice, OFDM signals are generated and detected using the Fast Fourier transform algorithm.

While OFDM has been applied for wideband digital communication in wireless transmission and for modem transmission over copper wires, it has recently also gained attention for future long-haul optical data transmission due to its robustness against signal distortion.

OFDM requires at the receiver side digital signal processing of the received signal. Since the signal rate for optical transmission is very high (40 or 100 Gbit/s), real time digital signal processing is challenging and can today only be realized through specialized integrated circuitry, i.e. using ASIC technology, Any simplification in the digital signal processing will minimize the digital circuitry and hence result in a reduction of chip size and power consumption,

### Summary of the Invention

It is an object of the present invention to provide a simplified method for optical data transmission using OFDM as well as a related transmitter and receiver.

These and other objects that appear below are achieved by a method of transmitting an optical signal using orthogonal frequency division multiplexing, which has the steps of
- performing an inverse Fourier transformation on a data signal;
- performing digital-to-analog conversion of the inverse Fourier transformed data signal, the conversion step being carried out at an auxiliary clock rate;
- modulating the analog signal onto an optical carrier to create an orthogonal frequency division multiplexed signal;
- transmitting the orthogonal frequency division multiplexed signal over an optical fiber link;
- performing analog-to-digital conversion on the orthogonal frequency division multiplexed signal; and
- performing a Fourier transformation of the digitized signal.

According to the invention a clock signal indicative of the auxiliary clock rate is transmitted together with the orthogonal frequency division multiplexed signal and an auxiliary clock signal is recovered therefrom at the receive side. The auxiliary clock signal is used as sampling frequency for the anaiog-to-digitat conversion step.

In particular, the invention recognizes that digital signal processing in the receiver can be simplified when the frequencies used in the transmitter for digital to analog conversion of the real and imaginary part of the inverse Fourier transformed time domain signal and in the receiver for analog to digital conversion of the received OFDM signal are locked to each other. This is achieved in accordance with the invention by adding a clock signal at the transmit side, restoring this clock signal at the receive side prior to any signal processing and using this restored clock signal to drive the anatog-to-ditgital converters (ADCs),

The invention is equally applicable to direct detection OFDM using up-conversion of the OFDM signal in the transmitter and down-conversion in the receiver as well as to baseband OFDM transmission and coherent detection at the receiver. In the former case, the same clock signal can preferably be used in the transmitter for up-conversion and in the receiver for down-converston.

The additional transmission of a clock signal will add optical power which cannot be used for sub-carrier transmission but for the advantage of a simplification of the digital circuitry. The invention provides therefore a tradeoff between transmit power, which corresponds to a maximum span length, and simplification of the receiver design,

### Brief Description of the Drawings

Preferred embodiments of the present invention will now be described with reference to the accompanying drawings in which
- figure 1: shows a synchronized OFDM transmission system for direct OFDM detection;
- figure 2: shows an OFDM transmitter for baseband OFDM transmission using an IQ modulator;
- figure 3: shows an OFDM signal spectrum with additional synchronization frequency;
- figure 4: shows an OFDM signal with synchronization frequency at half the clock rate; and
- figure 5: shows an QFDM spectrum with synchronization frequencies at different fractions of the spectrum_{.}

### Detailed Description of the Invention

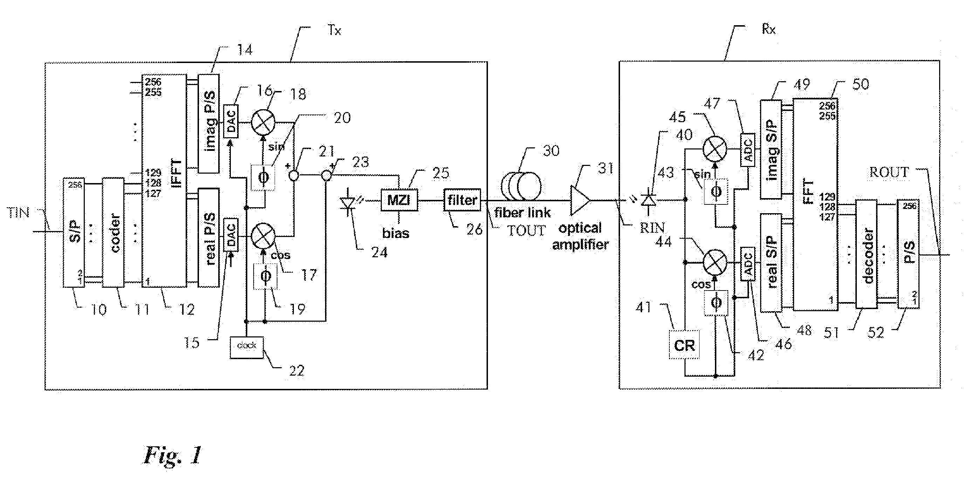

A OFDM transmission system is shown in figure 1. A transmitter Tx generates from a data signal TIN an OFDM signal TOUT for transmission over a fiber link 30 to a receiver Rx. Depending on the length of the optical fiber link 30, an optical amplifier 31 such as a rare earth-doped fiber amplifier, a semiconductor optical amplifier, or a Raman amplifier can be provided for signal amplification. The receiver Rx recovers from the received signal RIN a data signal ROUT.

The transmitter Tx contains a serial-to-parallel converter 10, a symbol coder 11, a digital signal processor 42 for performing inverse Fourier transformation; parallel-to-serial converter 13, 14 for the real and imaginary parts of the transformed signal, and on up-conversion stage including multipliers 17, 18 for multiplying the converted analog signal with a frequency signal. Multipliers are often also termed mixers.

The up-converied signals are added together in an adder stage 21 and fed to an optical modulator 25, which modulates the cv signal of a transmit laser diode 24. Optionally, the modulated optical signal from the modulator 25 can be filtered by a filter device 26 and is then fed to the optical fiber link 30.

The operation of the OFDM transmitter Tx is as follows: The input data signal TIN is a data signal with very high bitrate such as 40 Gbit/s. It is converted to a parallel format in S/P converter 10. In the specific embodiment, the parallel format has a width of 256 bit. The symbol coder reduces the number parallel bit by forming multi-level symbols. In the specific embodiment, a quaternary format with real and imaginary part is used thus reducing the number of symbols to 128. Alternatively, higher level symbol format such as 16Q or 64Q signals could be generated, in which one symbol carries 4 or 6 bits, respectively.

The remaining 128 symbol signals are input as "virtual" frequency signals to an inverse Fast-Fourier transformation (IFFT) 12. Signal inputs 129-256 of the IFFT 12 can be set to zero. In an alternative embodiment, additional frequencies could also be used. The frequency signals are termed virtual, because this is just a mathematical calculation, where the input is seen as the frequency domain input of the IFFT.

The output of the IFFT 12 is a time domain signal which has an imaginary and a real part. These two sub-signals are converted back to a serial format in P/S converters 15, 16 and subject to digital-to-analog conversion by digital-to-analog converters (DACs) 15, 16, respectively.

The DACs 15 and 16 must be clocked at a transmit clock frequency, which must correspond to the input signal TIN rate. For 40 Gbit/s using a quaternary symbol format, the conversion rate must be at least 10 GHz. Likewise, for an input signal at 100 Gbit/s, the conversion rate must be at least 25 GHz.

The two analog output signals must now be combined for transmission. Since these are the real and imaginary parts of a complex signal, up-conversion at an auxiliary frequency is required. For this purpose, the same frequency signal can be used as for the D/A conversion, but with a phase difference of 90° between the imaginary and real part sub-signal. The frequency difference is set in phase shifters 19, 10, to which the auxiliary clock from clock generator 22 is fed. In the exemplary embodiment, two phase shifters are shown. If should be noted, however, that one of these could be omitted. The phase shifted auxiliary frequency signals and the corresponding real or imaginary part sub-signals are multiplied by the two electrical multipliers 17 and 18, respectively and added together in adder stage 21,

The up-converted, combined signal is then modulated in modulator 25, which is in the embodiment a Mach-Zehnder modulator, onto a cv laser signal from laser diode 24.

In order to enable the receiver to lock onto the sampling frequency, the frequency signal from clock generator 22 is added in adder stage 23 to the OFDM signal and then modulated onto the optical carrier.

The addition of the clock signal to the OFDM signal can be performed by different means. A very simple approach is the addition of a DC signal in front of the multipliers 17, 18, which causes a well defined portion of the clock signal to be added to the OFDM signal. The addition of the clock signal to the OFDM signal can alternatively be performed in the digital domain, i.e. through appropriate processing steps in the DSP 12.

The receiver Rx has at its input a photo diode 40 for converting the optical OFDM signal RIN received from the optical fiber link 30 into an an analog electrical signal. The analog electrical signal is fed to two multiplier stages 43, 44 and to a clock recovery 41. A recovered clock signal from clock recovery 41 leads to the multiplier stages 43, 44, too. The output from the two multipliers 43, 44 is connected to one of analog-to-digitat converters (ADCs) 46, 47 each, which are also clocked by the recovered clock signal. The two ADCs 46, 47 are connect to two P/S converters, which produce a parallel signal from the digitized input for a subsequent Fast-Fourier transformation. A symbol decoder decodes the Fourier-converted output and feds it to a P/S converter, which produces the recovered output signal ROUT.

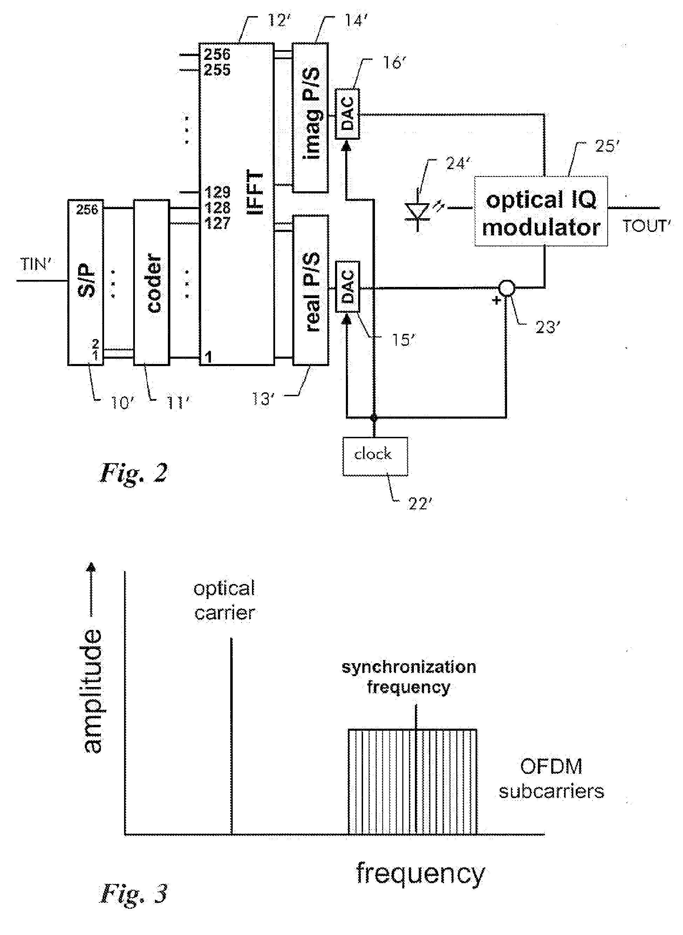

The operation of the receiver Rx is as follows, The clock recovery circuit 41 looks to the dedicated clock line in the received spectral signal (see also figure 3) and separates the clock signal added at the transmitter Tx. In the simplest case, the clock recovery (CR) circuit 41 can be realized as a narrow band filter aligned to the clock frequency. CR circuit 41 can additionally contain a narrow band PLL. The recovered clock signal is used for down-converting the received OFDM signal RIN in multiplier stages 43, 44 and is also used to drive the ADCs 46, 47.

The upper branch is of the receiver circuit represents the imaginary part signal and the lower branch the real part signal of the OFDM signal. S/P converters 48, 49, the DSP circuit 50 for Fast-Fourier Transformation (FFT), the symbol decoder 51, and the P/S converter 52 perform the inverse functions as the corresponding circuitry in the transmitter Tx.

The additional transmission of the clock line in the OFDM spectral signal enables a very simple analog recovery of the conversion clock signal, which otherwise would have to be derived though complex digital processing after AID conversion.

The locking of the conversion frequencies of the transmitter side DACs and the receiver side ADCs simplifies considerably the processing of the received signal since samples in the receiver Rx relate to the symbols in the transmitter Tx. Without this one-for-one correspondence, more sophisticated oversampling technology as is used at lower rates in wireless OFDM transmission or digital processing for clock recovery and signal interpolation would be required.

A second embodiment of a transmitter in accordance with the invention is shown in figure 2. SP converter 10', symbol coder 11 IFFT 12', PS: converters 13', 14' and DACs 15', 16' operate in the same way as the corresponding functions of transceiver Tx in figure 1. Instead of up-converting the digitized signals, they are used to drive an in-phose/quadrature (IQ) modulator 25'. Such IQ modulators ore known as such and are generally used to generated (D)QPSK signals, IQ modulator 25' produces a baseband OFDM signal for baseband OFDM transmission,

To transmit the conversion clock signal from clock source 22' together with the OFDM signal, the former is added in adder gate 23' to the real part signal before it enters IQ modulator 25'. It should be noted that the clock signal could be added to any one of the real part signal, the imaginary port signal or to both of these.

A corresponding receiver is not shown. For baseband OFDM transmission, a coherent or heterodyne receiver could be used, which utilizes a cv laser source as auxiliary frequency in conjunction with an optical hybrid to generate optical real and imaginary part signals and feed them to two separate photo detectors. The clock line can be separated in the same way as in the first embodiment and used to drive ADC for AD conversion.

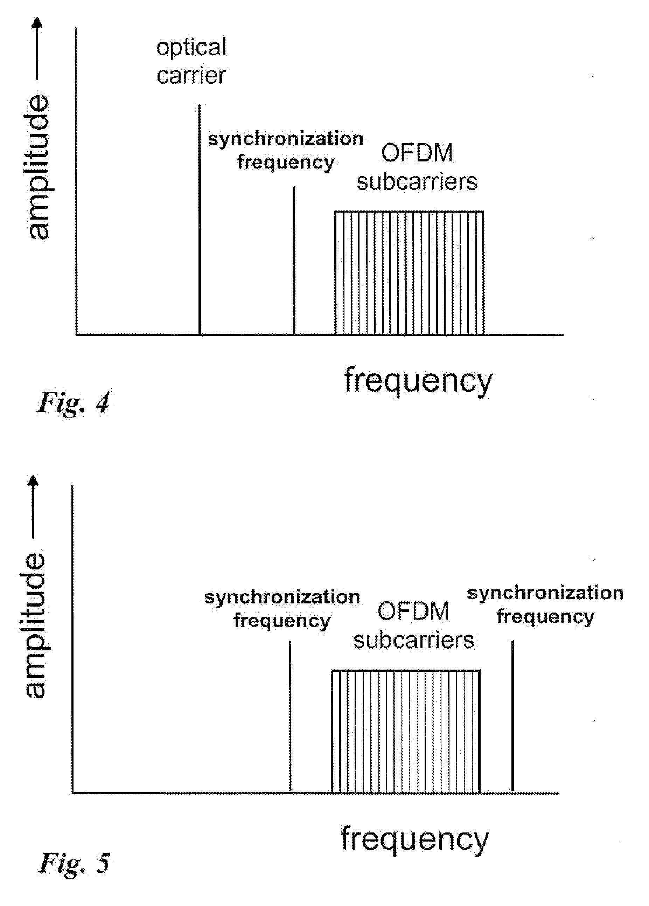

Figure 3 shows the spectrum of the OFDM signal with the additional clock line transmuted within the OFDM band, This signal transmission is applicable to direct detection (figure 1) as well as to coherent OFDM (figure 2), In another preferred embodiment, the additional clock line can also be transmitted at a fraction of the conversion frequency, for instance at half the frequency. An example of this is shown in figure 4. A further alternative is shown in figure 5, where synchronization frequencies are transmitted above and below the OFDM band.

These and other modifications of the invention would be apparent to those skilled in the art having understood the concepts of the present invention.

## Claims

1. A method of transmitting an optical signal using orthogonal frequency division multiplexing, comprising the steps of
- performing an inverse Fourier transformation on a data signal (TIN);
- performing dsgital-to-anlog conversion of the inverse Fourier transformed data signal, said conversion step being carried out at an auxiliary clock rate;
- modulating the analog signal onto an optical carrier to create on orthogonal frequency division multiplexed signal (TOUT);
said method further comprising the steps of:
- transmitting said orthogonal frequency division multiplexed signal (TOUT) over an optical fiber link (30);
- performing analog-to-digital conversion on said orthogonal frequency division multiplexed signal (RIN); and
- performing a Fourier transformation of the digitized signal;
**characterized in that**
a clock signal indicative of said auxiliary clock rate is transmitted together with said orthogonal frequency division multiplexed signal; that an auxiliary clock signal is recovered therefrom at the receive side and used as sampling frequency for said analog-to-digital conversion step.

2. A method according to claim 1; further comprising the steps of up-converting the digitized inverse Fourier transformed data signal prior to said modulation step using a frequency signal at said auxiliary clock rate and down-converting the received orthogonal frequency division multiplexed signal prior to said analog-to-digital conversion step using said recovered auxiliary clock signal.

3. A method according to claim 1; wherein said modulation step creates a baseband orthogonal frequency division multiplexed signal and wherein at the receive side, said baseband orthogonal frequency division multiplexed signal is mixed with a local optical signal for coherent detection.

4. A method according to claim 1; wherein said clock signal transmitted together with said orthogonal frequency division multiplexed signal has a clock rate which is a multiple or sub-multiple of said auxiliary clock rate.

5. An optical transmitter (Tx) for transmitting an optical signal using orthogonal frequency division multiplexing comprising
- a processor (12) for performing an inverse Fourier transformation on a data signal (TIN) to be transmitted;
- at least one digital-to-analog converter (15, 16) for converting the inverse Fourier transformed data signal into an analog signal, said converters (15, 16) being connected to a clock source (22) to perform said conversion at an auxiliary clock rate; and
- an optical modulator (25) for modulating said analog signal onto an optical carrier to create an orthogonal frequency division multiplexed signal (TOUT) for transmission;
**characterized in that**
said modulator (25) is connected to said clock source (22) to add a clock signal indicative of said auxiliary clock rate to said orthogonal frequency division multiplexed signal for transmission.

6. An optical transmitter (Tx) according to claim 5, further comprising a up-conversion stage (17, 18) between said analog-to-digital converter (15, 16) and said optical modulator (25) and connected to said clock source (22) for up-converting the digitized inverse Fourier transformed data signal using a frequency signal at said auxiliary clock rate.

7. An optical transmitter according to claim 5, wherein said modulator (25') is an IQ modulator for modulating onto said optical carrier an baseband orthogonal frequency division multiplexed signal.

8. An optical receiver (Rx) for optical orthogonal frequency division multiplexed signals comprising
a n detector (40) for converting a received optical orthogonal frequency division multiplexed signal into an analog electrical signal;
a t least one analog-to-digital converter (46, 47) for converting said analog electrical signal into a digitized signal; and
a processor (50) for performing a Fourier transformation of the digitized signal;
**characterized by**
a clock recovery circuit (41) connected to said detector (40) for extracting a clock signal received together with said orthogonal frequency division multiplexed signal (RIN) and generating a recovered auxiliary clock signal which is fed as sampling frequency to said analog-to-digital converter (46, 47).

9. An optical receiver (Rx) according to claim 8, further comprising a down-converting stage (44, 45) between said detector (40) and said analog-to-digital converter (46, 47) and connected to said clock recovery circuit (41) for down-converting the received orthogonal frequency division multiplexed signal using said recovered auxiliary clock signal.

10. An optical receiver according to claim 8, wherein said detector is a coherent detector and wherein said receiver further comprises a local optical signal source and an optical hybrid for mixing a received baseband orthogonal frequency division multiplexed signal with a local optical signal for coherent detection,
